# EUROPÄISCHE PATENTSCHRIFT

(11) **EP 1 070 896 B1**
(45) Veröffentlichungstag und Bekanntmachung des Hinweises auf die Patenterteilung: **15.06.2005**
(21) Anmeldenummer: 00250252.4
(22) Anmeldetag: 21.07.2000
(51) Int. Cl.: F16L 33/207, F16L 13/14, B21K 1/16

(54) **Verfahren zur Herstellung eines metallischen Pressfittingelementes**
Method for making a press-fitting element
Procédé de fabrication d'un élément d emmanchement par pressage

(30) Priorität: 22.07.1999 DE 19934899; 15.06.2000 DE 10029479
(43) Veröffentlichungstag der Anmeldung: 24.01.2001
(73) Patentinhaber: Geberit Mapress GmbH, 40764 Langenfeld (DE)
(72) Erfinder: Sedlak, Bernd, 45478 Mülheim (DE)
(74) Vertreter: Meissner, Peter E., Dipl.-Ing.

(56) Entgegenhaltungen:
- WO-A-99/32239
- DE-A- 2 758 668
- DE-B- 1 187 870
- GB-A- 2 121 705
- US-A- 3 371 408
- US-A- 4 381 594

## Beschreibung

Die Erfindung betrifft ein Verfahren zur Herstellung eines metallischen Pressfittingelementes gemäß dem Oberbegriff des Patentanspruches 1.

Preßfittings für die Hausinstallation aus Kohlenstoffstahl oder hochlegiertem Stahl sind bekannt (siehe Prospekt Mannesmann Preßfitting-System / Sanitär, Ausgabe 8/1994). Kernstück des Preßfrttingsystems ist ein aus einem Rohrabschnitt hergestellter plastisch verformbarer Preßfitting, der vorzugsweise als Muffe, Bogen, T-Stück oder Reduzierstück ausgebildet ist. Nachteilig dabei ist, dass der Preßfitting wegen der hohen Anforderung bezüglich der Oberfläche und der Abmessungstoleranzen aus einem Abschnitt eines speziell hergestellten Rohres unter Anwendung mehrerer Umformschritte gewonnen wird. Das Ausgangsrohr ist üblicherweise ein nahtloses oder längsnahtgeschweißtes Rohr, das enge Toleranzen und eine hohe Oberflächengüte aufweist. Das Ausgangsrohr wird in Abschnitte zerteilt und durch Anwendung mehrerer Umformschritte, z. B. Einziehen, Bördeln, Drücken die gewünschte, endgültige Querschnittsform erzeugt. Da das Ausgangsprodukt schon relativ hochwertig ist, ist auch der daraus hergestellte Preßfitting relativ teuer. Darüber hinaus gibt es neben den Standardtypen von Preßfittings auch solche mit Gewinde, wie z. B. Übergangsbogen oder Ansatzbogen sowie Deckenwinkel und Übergangswinkel, bei denen das zuvor geschilderte Herstellverfahren nicht anwendbar ist.

Zur Lösung dieses Problems ist bereits vorgeschlagen worden (DE 39 19 496 C1), dass der den Typ des Fittings charakterisierende Bereich als ein aus einem metallischen Werkstoff hergestellter gegossener Grundkörper ausgebildet ist, der mit einem aus Blech hergestellten standardisierten Anschlußstück fest verbunden ist. Die Verbindung kann wahlweise über Schweißen, Löten oder Kleben erfolgen. Nachteilig bei diesem Verfahren ist der Aufwand für die separate Herstellung des Anschlußstutzens, der Aufwand für die Verbindungstechnik selbst und die Kontrolle der Verbindungsnaht.

Bei einer weiteren Lösung gemäß der EP 0 343 395 B1 wird eine Preßverbindungsanordnung vorgeschlagen, bei der ein Anschlußstutzen einer Armatur oder eines Fittings aus Metallguß auf ein im Bereich der Preßverbindung keine herausgearbeiteten wesentlichen Wanddickenänderungen aufweisendes, unbewehrtes Rohr aufgepreßt wird. Die Quetschgrenze des Anschlußstutzens ist dabei höchstens gleich groß wie diejenige des Rohres. Die Wanddicke des Anschlußstutzens ist so dimensioniert, dass diese der Rückbildung des Rohres aufgrund dessen Elastizität nach der Entlastung standhält. Als Metallguß wird eine Rotgußlegierung verwendet, die vorzugsweise annähernd 2% Sn, 8% Zn, 5% Pb, 2,2 - 3,0 % Ni und Rest Kupfer enthält. Rotguß ist an sich ein spröder Werkstoff, der sich ohne Rißbildung plastisch nicht verformen läßt. Deshalb muß zum einen die Wanddicke im Preßbereich des Anschlußstutzens dünn bemessen sein und zum anderen muß die Wanddicke aber noch groß genug sein, damit der Anschlußstutzen der elastischen Rückfederung des Rohres widerstehen kann. Weiterhin muß der Ni-Gehalt in der Rotgußlegierung hoch genug sein, damit durch den erhöhten Nickelgehalt die Bruchdehnung verbessert wird.

In der DE-AS 11 87 870 ist ein Verfahren zur Herstellung einer Rohrverbindung bestehend aus einer plastisch verformbaren metallischen Kupplungshülse, vorzugsweise aus Stahl, offenbart. Bei dem bekannten Verfahren wird die Kupplungshülse durch Formpressen erzeugt. Alternativ kann die Kupplungshülse ausgehend von einem nicht spezifizierten Ausgangsmaterial durch Drehen erzeugt werden. Die erzeugte Kupplungshülse ist charakterisiert durch einen hakenförmig, im Querschnitt nahezu dachartig ausgebildeten, einen Runddichtring aufnehmenden Bereich und einen daran anschließenden, der Einschubseite des mit der Kupplungshülse zu verbindenden Stahlrohres abgewandten zylindrischen Bereich. Mittels zweier Preßbacken wird nach dem Ansetzen und Schließen der Preßbacken eine unlösbare, dichte Rohrpressverbindung gebildet, wobei während des Verpressens die Preßbacken sowohl auf den hakenförmig ausgebildeten Bereich einschließlich des darin eingelegten Runddichtringes, als auch auf den der Einschubseite abgewandten zylindrisch ausgebildeten Abschnitt der Kupplungshülse einwirken. Die Einwirkung ist charakterisiert durch eine ausschließliche Durchmesserverringerung beider kontaktierter Bereiche. Nachteilig dabei ist, dass der eingekammerte Runddichtring bei dieser Art der Verpressung nur geringfügig zusammengepreßt wird, so dass die Abdichtung nur für geringe Drücke ausreichend ist.

Von weiterem Nachteil ist, dass insbesondere bei Kupplungshülsen aus Stahl beim Drehen ein Fließspan erzeugt wird, der in dem hakenförmig ausgebildeten Bereich innenseitig eingezwängt werden kann. Dies beeinträchtigt den Drehvorgang und kann im ungünstigsten Fall zu einer Zerstörung des Drehwerkzeuges führen. Dies erhöht die Stillstandszeiten und damit die Kosten für das Pressfittingelement.

In der DE 295 04 502 U1 ist ein Verfahren zur Herstellung eines verpressbaren Fittings aus dem Werkstoff Temperguss bekannt. Diese Fittings weisen alle Merkmale der bekannten aus Blech hergestellten Pressfittings auf. Nachteilig dabei ist, dass alle Rohlinge einer Glühbehandlung unterzogen werden müssen, um ein gebrauchsfähiges Gefüge zu erhalten. Anschließend müssen die Rohlinge zerspanend verarbeitet werden, um die Gusshaut zu entfernen und Abmessungsungenauigkeiten zu beseitigen. Für Innendrücke größer 25 bar sind Pressfittings aus Temperguss nicht zugelassen.

Aufgabe der Erfindung ist es, ein Verfahren zur Herstellung eines metallischen Pressfittingelementes anzugeben, mit dem das Preßfittingelement unabhängig vom verwendeten metallischen Werkstoff, insbesondere die rotationssymmetrischen Preßfittingelemente, kostengünstig und fertigungssicher hergestellt werden können und das Pressfittingelement für Betriebsdrücke bis zu 40 bar geeignet ist.

Diese Aufgabe wird durch das Verfahren mit den Merkmalen des Anspruches 1 gelöst. Vorteilhafte Weiterbildungen sind jeweils Gegenstand von Unteransprüchen.

Lösungsgemäß wird als Ausgangsmaterial für das Preßfittingelement, ein Voll- oder Hohlstab erzeugt, der spanabhebend oder alternativ spanabhebend und spanlos bearbeitet wird, wobei der zu verpressende Bereich des Preßfittingelementes nach Form und Wanddicke dem zu verpressenden Bereich eines aus Blech kalt formgepreßten Preßfittingelementes entsprechend durch spanabhebende oder alternativ spanabhebende und spanlose Bearbeitung ausgebildet wird. Die so hergestellten Pressfittingelemente sind plastisch verformbar, um mittels eines das Pressfrttingelement zusammen mit einem darin eingeschobenen Leitungsrohr umfassenden, zwei Pressbacken aufweisenden Presswerkzeuges nach dem Ansetzen und Schließen der Pressbackeen eine unlösbare und dichte Verbindung zwischen dem Pressfittingelement und dem Leitungsrohr zu bilden. Während des Verpressens können die Pressbacken sowohl auf den hakenförmig ausgebildeten Bereich einschließlich des darin eingelegten Runddichtringes, als auch auf den der Einschubseite abgewandten zylindrisch ausgebildeten Abschnitt des Pressfittingelementes so einwirken, dass der Scheitelbereich des hakenförmig ausgebildeten Bereiches überwiegend im Durchmesser verringert und die an den Scheitelbereich angrenzenden Bereiche des hakenfömig ausgebildeten Bereiches aufeinander zugedrückt werden. Der Voll- oder Hohlstab wird durch Stranggießen oder Strangpressen erzeugt. Die spanabhebende Bearbeitung ist vorzugsweise ein Drehen und die beim Alternativverfahren nachfolgende spanlose Bearbeitung ist eine Kaltumformung, vorzugsweise ein Pressen. Die spanlose Bearbeitung bezieht sich auf den hakenförmig ausgebildeten Bereich, so dass dadurch die bisher auftretenden Probleme bei der spanabhebenden Bearbeitung (Drehen) dieses Bereiches entfallen. Im günstigsten Fall besteht beim Alternativverfahren die Bearbeitung aus nur einem spanabhebenden und einem spanlosen Verfahrensschritt. Es können aber auch mehrere Verfahrensschritte erforderlich sein.

Die vorgeschlagene Verfahrensweise hat den Vorteil, dass die im Markt in großen Stückzahlen vorhandenen Preßbacken unverändert verwendet werden können und die Art der Verpressung eine Dichtheit der Rohrpressverbindung für Betriebsdrücke bis max. 40 bar sicherstellt. Der eigentliche Vorteil ist aber darin zu sehen, dass die so hergestellten Preßfittingelemente wesentlich kostengünstiger sind als die durch Formpressen hergestellten. Das gilt insbesondere für Preßfittingelemente, die als Übergangsstück oder als Übergangsmuffe ausgebildet sind. Diese Teile werden entsprechend dem bekannten Verfahren zweiteilig hergestellt und die zwei Abschnitte, d.h. Preßfittingabschnitt und Gewindeabschnitt durch Schweißen, Löten oder Kleben miteinander verbunden. Diese Verbindungstechnik sowie deren Nachkontrolle entfällt bei dem neuen Verfahren.

Um das Gefüge des Ausgangsmaterials zu verbessern, ist es vorteilhaft, den Stranggußknüppel, bzw. Stranggußblock durch ein ein- oder mehrstufiges Walz-Schmiede- oder Ziehverfahren in einen Voll- oder Hohlstab umzuformen. Für größere Abmessungen, d.h Nennweite ≥ 40 mm kann es vorteilhaft sein, statt eines Stabes einen einzelnen Rohling zu erzeugen. Die äußere Kontur des Rohlings entspricht mit einem Aufmaß versehen der späteren Fertigkontur, die dann durch eine spanabhebende Bearbeitung erzeugt wird. Der Rohling wird durch Schmieden oder Gießen hergestellt, wobei bei einem durch Gießen hergestellten Rohling der Hauptteil der spanabhebenden Bearbeitung die Entfernung der Gußhaut ist.

Für Preßfittingelemente mit einem für ein ansetzbares Haltewerkzeug aufweisenden Bereich, z.B. Sechskant beim Übergangsstück oder Übergangsmuffe, wird ein Voll- oder Hohlstab erzeugt, der über die ganze Länge eine als Fertigkontur geeignete äußere Kontur aufweist. Vorzugsweise wird unter Beachtung der erforderlichen Toleranzen ein Sechskantstab durch Ziehen erzeugt. Der am Preßfittingelement erforderliche Sechskantbereich braucht nur hinsichtlich der gewünschten Breite bearbeitet zu werden, da die gewünschte äußere Kontur in diesem Bereich schon durch das Ziehen erzeugt wurde. Der Hauptteil der spanabhebenden Bearbeitung bezieht sich auf das Gewinde und den Preßbereich, während beim Alternativverfahren der hakenförmig ausgebildete Bereich spanlos erzeugt wird. Geht man für solche Teile von einem geschmiedeten oder gegossenen Rohling aus, wird man für die Gußvariante auch den Sechskantbereich spanabhebend bearbeiten müssen. Als Werkstoff kommen unlegierte C-Stähle, nichtrostende hochlegierte Stähle sowie Rotguß und Messing in Betracht. Beim Rotguß hat sich insbesondere die Legierung mit der Bezeichnung CuSn5ZnPb mit der Werkstoffnummer 2.1096.01 als vorteilhaft herausgestellt.

Da Rotguß ein spröder und zu Rißbildung neigender Werkstoff ist, ist es vorteilhaft, entweder vor oder nach der spanabhebenden Bearbeitung eine Wärmebehandlung durchzuführen. Eine Wärmebehandlung kann auch für Pressfittingelemente aus Stahl wegen der Verfestigungstendenz erforderlich sein. Beispielsweise hat es sich als günstig herausgestellt, wenn Pressfittingelemente aus hochlegiertem Stahl hergestellt werden, diese nach der spanabhebenden Bearbeitung weichzuglühen. Die Glühtemperatur liegt bei ca. 1100° C und die Abkühlung erfolgt in reduzierender Atmosphäre, so dass keine Nachbehandlung erforderlich ist.

Für die Herstellung von Deckenwinkeln wird vorgeschlagen, das eigentliche Preßfittingelement so herzustellen, wie schon zuvor erläutert und die Befestigungsplatte separat zu erzeugen und durch Schweißen oder Löten mit dem Preßfittingelement zu verbinden. Da diese Verbindungsnaht keine die Dichtheit gewährleistende Naht ist, braucht sie auch nicht - außer bei der üblichen Fertigungskontrolle - gesondert geprüft zu werden.

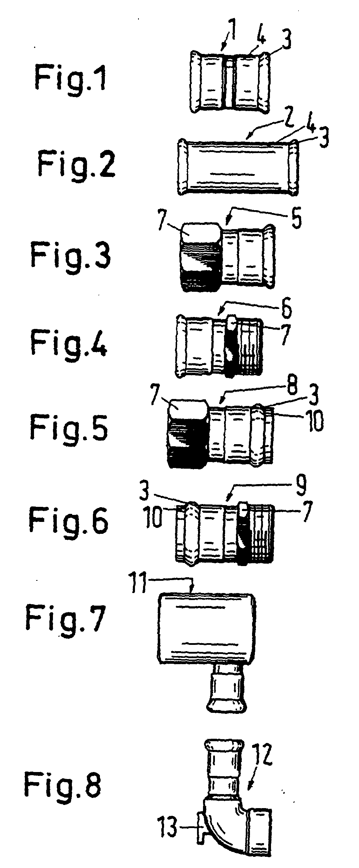

In den Figuren 1 - 8 sind Beispiele für Preßfittingelemente dargestellt, die für das vorgeschlagene Herstellverfahren besonders geeignet sind. Dabei handelt es sich in Figur 1 um eine Muffe 1 und in Figur 2 um eine Schiebemuffe 2. Beide Preßfittingelemente 1, 2 sind charakterisiert durch einen hakenförmig, im Querschnitt nahezu dachartig ausgebildeten, einen Runddichtring (hier nicht dargestellt) aufnehmenden Bereich 3 und einen daran anschließenden, der Einschubseite des mit dem Preßfittingelemente 1,2 zu verbindenden Leitungsrohres (hier nicht dargestellt) abgewandten zylindrischen Bereich 4.

Figur 3 zeigt eine Übergangsmuffe 5 mit Innengewinde, Figur 4 ein Übergangsstück 6 mit Außengewinde. Beide Preßfittingelemente 5, 6 sind charakterisiert durch einen Sechskantbereich 7, an den zum Kontem ein Maulschlüssel (hier nicht dargestellt) ansetzbar ist. Um den Zerspanungsaufwand zu reduzieren, wird ein Ausgangsmaterial erzeugt, das entweder über die ganze Länge oder reduziert auf diesen Bereich mit einer äußeren Sechskantkontur versehen ist. Die in den Figuren 5 und 6 dargestellten Preßfittingelemente 8,9 sind vom Typ her identisch mit denen gemäß denen von Figur 3 und 4, aber mit dem Unterschied, dass sich an den den Dichtring aufnehmenden hakenförmigen Bereich 3 noch ein kurzer zylindrischer Abschnitt 10 anschließt. In Figur 7 ist ein 90 Grad Übergangswinkel mit Innengewinde dargestellt und in Figur 8 in Seitenansicht ein Deckenwinkel 12. Auch diese Preßfitingelemente 11, 12 sind generell für das vorschlagene Herstellverfahren geeignet, auch wenn der Zerspanungsaufwand gezwungenermaßen größer ist als für rein rotationssymmetrische Preßfittingelemente. Im Falle des Deckenwinkel 12 wird man die Befestigungsplatte 13 separat herstellen und durch Schweißen oder Löten mit dem eigentlichen Preßfittingelement verbinden.

Ein Herstellbeispiel gemäß dem Alternativverfahren ist in den Figuren 9-12 dargestellt.

Dabei zeigt:
- Fig. 9: in einer Längsansicht einen Vollstab mit Sechskantprofil als Ausgangsmaterial,
- Fig. 10: in einer Ansicht und in einem Schnitt ein Übergangsstück nach der spanabhebenden Bearbeitung,
- Fig. 11: in einer Ansicht und in einem Schnitt ein Übergangsstück nach der ersten spanlosen Umformung und
- Fig. 12: in einer Ansicht und in einem Schnitt ein Übergangsstück als Fertigteil nach der zweiten spanlosen Umformung.

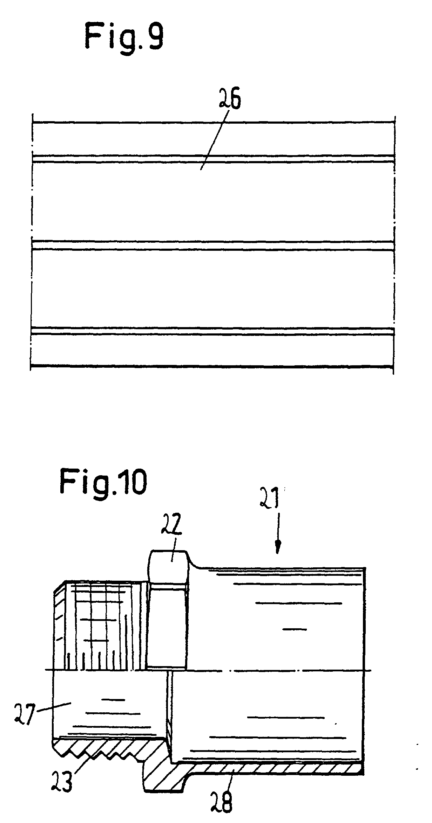

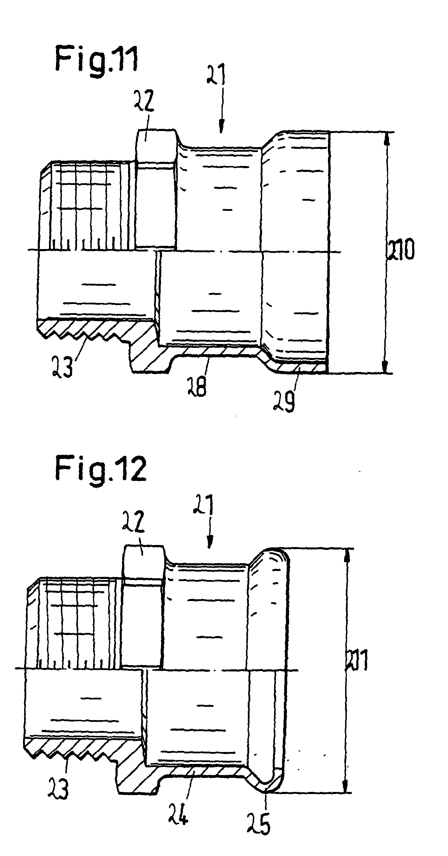

In den Figuren 9 bis 12 sind für das Beispiel eines Übergangsstückes 21 mit Außengewinde (Figur 12) die wesentlichen Verfahrensschritte zur Herstellung eines solchen Übergangsstückes dargestellt. Dieses Übergangsstück 21 ist charakterisiert durch einen Sechskantbereich 22, um daran ein hier nicht dargestelltes Haltewerkzeug ansetzen zu können. Um dieses Pressfittingelement mit einem Gewinderohr verbinden zu können, weist das Übergangsstück 21 einen Gewindeabschnitt 23 auf, der in diesem Ausführungsbeispiel mit einem Außengewinde versehen ist. Ein vergleichbares Pressfittingelement mit einem Gewindeabschnitt mit Innengewinde wird als Übergangsmuffe bezeichnet. An den Sechskantbereich 22 schließt sich der eigentliche Pressbereich an. Dieser besteht aus einem zylindrischen Abschnitt 24 der einschubseitig übergeht in einen hakenförmig ausgebildeten Bereich 25. In der dadurch erzeugten innenseitig liegenden Ringnut kann ein hier nicht dargestellter Runddichtring eingelegt werden.

Ausgangsmaterial für dieses Herstellbeispiel soll ein Vollstab 26 mit Sechskantform sein (Figur 9). Dieser Vollstab 26 kann erzeugt worden sein durch Schmieden oder mehrfaches Ziehen eines Stranggussknüppels oder Strangpressteiles. Die anschließende spanabhebende Bearbeitung kann fortlaufend an einer Stange in einem sog. Spindelautomaten erfolgen oder stückweise an einem vorher von der Stange abgetrennten Abschnitt.

Figur 10 zeigt das Übergangsstück 21 nach der ersten spanabhebenden Bearbeitung des Vollstabes 26. Die spanabhebende Bearbeitung bezieht sich zum einen auf die Herstellung der Bohrung 27, des Gewindeabschnittes 23 sowie der Stirnflächen des Sechskantbereiches 22. Der spätere Pressbereich wird als Rohrhülsenabschnitt 28 hergestellt.

In Figur 11 ist der erste spanlose Bearbeitungsschritt des Übergangsstückes 21 dargestellt. Es zeigt den mittels eines Pressverfahrens erzeugten aufgeweiteten im Stimbereich liegenden Abschnitt 29 wobei der äußere Durchmesser 210 in etwa dem späteren äußeren Durchmesser 211 des hakenförmig ausgebildeten Bereiches 25 entspricht. In einem weiteren spanlosen Bearbeitungsschritt wird der aufgeweitete Abschnitt 29 zum hakenförmä ausgebildeten Bereich 25 (Figur 12) umgeformt.

Alternativ ist es auch möglich, die in Figur 11 dargestellte Konfiguration durch Drehen herzustellen und nur einen spanlosen Bearbeitungsschritt für die Anformung des hakenförmig ausgebildeten Bereiches 25 vorzusehen.

## Patentansprüche

1. Verfahren zur Herstellung eines metallischen Pressfittingelementes (1,2,5,6,8,9,11,12,21),
- mit einem hakenförmig, im Querschnitt nahezu dachartig ausgebildeten, einen Runddichtring aufnehmenden Bereich (3,25) und einem daran anschließenden zylindrischen Bereich (4,24), der der Einschubseite des mit dem Pressfittingelement zu verbindenden Leitungsrohres abgewandt ist,
- wobei als Ausgangsmaterial für das Pressfittingelement ein Voll- oder Hohlstab aus Strangguss- oder Strangpressmaterial eingesetzt wird, der spanabhebend bearbeitet wird, und
- wobei die zu verpressenden Bereiche (3,4; 24,25) des Pressfittingelementes (1,2,5,6,8,9,11,12,21) nach Form und Wanddicke den zu verpressenden Bereichen eines aus Blech kalt formgepressten Pressfittingelementes entsprechend durch spanabhebende Bearbeitung so ausgebildet werden,
- dass die so hergestellten Pressfittingelemente (1,2,5,6,8,9,11,12,21) plastisch verformbar sind, um mittels eines das Pressfittingelement zusammen mit einem darin eingeschobenen Leitungsrohr umfassenden und mindestens zwei Pressbacken aufweisenden Presswerkzeuges nach dem Ansetzen und Schließen der Pressbacken, eine unlösbare und dichte Verbindung zwischen dem Pressfittingelement und dem Leitungsrohr zu bilden und
- dass während des Verpressens die Pressbacken sowohl auf den hakenförmig ausgebildeten Bereich (3,25) einschließlich des darin eingelegten Runddichtringes, als auch auf den der Einschubseite abgewandten zylindrisch ausgebildeten Abschnitt (4,24) des Pressfittingelementes (1,2,5,6,8,9,11,12,21) so einwirken können, dass die Scheitelbereiche des hakenförmig ausgebildeten Bereiches (3,25) überwiegend im Durchmesser verringert und die an den Scheitelbereich angrenzenden Bereiche des hakenförmigen Bereiches (3,25) aufeinander zugedrückt werden.

2. Verfahren nach Anspruch 1,
**dadurch gekennzeichnet,**
**dass** der Voll- oder Hohlstab zusätzlich spanlos bearbeitet wird.

3. Verfahren nach Anspruch 1,
**dadurch gekennzeichnet,**
**dass** zuerst ein Stranggußknüppel hergestellt wird, der anschließend in einem ein- oder mehrstufigen Walzverfahren zu einem Voll- oder Hohlstab umgeformt wird.

4. Verfahren nach Anspruch 1,
**dadurch gekennzeichnet,**
**dass** zuerst ein Stranggußknüppel hergestellt wird, der anschließend in einem ein- oder mehrstufigen Schmiedeprozeß in einen Voll- oder Hohlstab umgeformt wird.

5. Verfahren nach Anspruch 1,
**dadurch gekennzeichnet,**
**dass** zuerst ein Stranggußknüppel hergestellt wird, der anschließend in einem ein- oder mehrstufigen Ziehprozeß in einen Voll- oder Hohlstab umgeformt wird.

6. Verfahren nach Anspruch 1,
**dadurch gekennzeichnet,**
**dass** der stranggepresste Voll- oder Hohlstab anschließend einem ein- oder mehrstufigen Schmiedeprozess unterworfen wird.

7. Verfahren nach Anspruch 1,
**dadurch gekennzeichnet,**
**dass** der stranggepresste Voll- oder Hohlstab anschließend einem ein- oder mehrstufigen Ziehprozess unterworfen wird.

8. Verfahren nach Anspruch 1,
**dadurch gekennzeichnet,**
**dass** als Ausgangsmaterial für das Preßfittingelement ein geschmiedeter Voll- oder Hohlrohling erzeugt wird, dessen äußere Kontur mit Aufmaß angenähert der Fertigkontur entspricht und die Fertigkontur durch eine spanabhebende Bearbeitung erzeugt wird.

9. Verfahren nach einem der Ansprüche 1 bis 8,
**dadurch gekennzeichnet,**
**dass** für Preßfittingelemente mit einem für ein ansetzbares Haltewerkzeug aufweisenden Bereich ein Voll- oder Hohlstab erzeugt wird, der über die ganze Länge eine als Fertigkontur geeignete äußere Kontur aufweist.

10. Verfahren nach einem der Ansprüche 1 bis 8,
**dadurch gekennzeichnet,**
**dass** für Preßfittingelemente mit einem für ein ansetzbares Haltewerkzeug aufweisenden Bereich ein geschmiedeter Rohling erzeugt wird, der einen solchen Bereich aufweist, der gegebenenfalls auch der spanabhebenden Bearbeitung unterzogen wird.

11. Verfahren nach Anspruch 9 und 10,
**dadurch gekennzeichnet,**
**dass** der für ein Haltewerkzeug geeignete Bereich als äußere Kontur einen Sechskant aufweist.

12. Verfahren nach einem der Ansprüche 1 bis 11,
**dadurch gekennzeichnet,**
**dass** die spanabhebende Bearbeitung ein Drehen ist.

13. Verfahren nach einem der Ansprüche 1-11,
**dadurch gekennzeichnet,**
**dass** die der spanabhebenden folgende spanlose Bearbeitung eine Kaltumformung ist.

14. Verfahren nach einem der Ansprüche 1-13,
**dadurch gekennzeichnet,**
**dass** der hakenförmige, einen Runddichtring aufnehmende Bereich, durch eine spanlose Bearbeitung erzeugt wird.

15. Verfahren nach einem der Ansprüche 1-14,
**dadurch gekennzeichnet,**
**dass** zur Hersstellung eines Pressfittingelementes mindestens eine spanlose Bearbeitung erforderlich ist.

16. Verfahren nach einem der Ansprüche 1-15,
**dadurch gekennzeichnet,**
**dass** als Material ein unlegierter C-Stahl verwendet wird.

17. Verfahren nach einem der Ansprüche 1 - 15,
**dadurch gekennzeichnet,**
**dass** als Material ein nichtrostender hochlegierter Stahl verwendet wird.

18. Verfahren nach Anspruch 17,
**dadurch gekennzeichnet,**
**dass** ein nichtrostender hochlegierter Stahl mit der Bezeichnung X5CrNiMo17-12-2 mit der Werkstoffnummer 1.4401 verwendet wird.

19. Verfahren nach Anspruch 1-17,
**dadurch gekennzeichnet,**
**dass** ein nichtrostender hochlegierter Stahl mit der Bezeichnung X6CrNiMoTi17-12-2 mit der Werkstoffnummer 1.4571 verwendet wird.

20. Verfahren nach einem der Ansprüche 1 - 15,
**dadurch gekennzeichnet,**
**dass** als Material ein Rotguss verwendet wird.

21. Verfahren nach Anspruch 20,
**dadurch gekennzeichnet,**
**dass** ein Rotguß mit der Bezeichnung CuSn2ZnPb mit der Werkstoffnummer 2.1098.01 verwendet wird.

22. Verfahren nach Anspruch 20,
**dadurch gekennzeichnet,**
**dass** ein Rotguß mit der Bezeichnung CuSn5ZnPb mit der Werkstoffnummer 2.1096.01 verwendet wird.

23. Verfahren nach einem der Ansprüche 1 bis 15,
**dadurch gekennzeichnet,**
**dass** als Material eine Kupfer-Zink-Legierung (Messing) verwendet wird.

24. Verfahren nach einem der Ansprüche 1 bis 23,
**dadurch gekennzeichnet,**
**dass** vor der Bearbeitung das Ausgangsmaterial ggf. einer Wärmebehandlung unterzogen wird.

25. Verfahren nach einem der Ansprüche 1 bis 23,
**dadurch gekennzeichnet,**
**dass** das fertigerstellte Preßfittingelement gegebenenfalls einer Wärmebehandlung unterzogen wird.

26. Verfahren nach Anspruch 25,
**dadurch gekennzeichnet,**
**dass** bei aus hochlegiertem Stahl hergestellten Pressfittingelementen die Wärmebehandlung ein Glühen bei ca. 1100°C ist mit einer Abkühlung in reduzierender Atmosphäre.

## Claims

1. Method for producing a metallic press fitting element (1, 2, 5, 6, 8, 9, 11, 12, 21),
- having a region (3, 25), which has a hook-shaped and virtually roof-like configuration in cross-section and receives an O-ring seal, and a cylindrical region (4, 24), which abuts thereon and is orientated away from the insertion side of the conduit which is to be connected to the press fitting element,
- a solid or hollow rod made of a continuously cast or extruded material being used as initial material for the press fitting element, which rod is machined in a metal-removing manner, and
- the regions (3, 4, 24, 25) of the press fitting element (1, 2, 5, 6, 8, 9, 11, 12, 21) which are to be pressed being configured, by means of metal-removing machining, according to shape and wall thickness corresponding to the regions, which are to be pressed, of a press fitting element which is cold compression-moulded from sheet metal, such that
- the thus-produced press fitting elements (1, 2, 5, 6, 8, 9, 11, 12, 21) are plastically deformable, in order to form, by means of a compression moulding die, which encloses the press fitting element together with a therein inserted conduit and has at least two compression jaws, a non-detachable and impermeable connection between the press fitting element and the conduit, after application and closing of the compression jaws, and such that
- during pressing, the compression jaws are able to act, both upon the region (3, 25) which has a hook-shaped configuration, including the therein inserted O-ring seal, and upon the portion (4, 24), which is orientated away from the insertion side and has a cylindrical configuration, of the press fitting element (1, 2, 5, 6, 8, 9, 11, 12, 21), such that the apex regions of the region (3, 25) which has a hook-shaped configuration is reduced predominantly in diameter and the regions of the hook-shaped region (3, 25) which abut on the apex region are pressed towards each other.

2. Method according to claim 1,
**characterised in that**
the solid or hollow rod is in addition machined without metal removal.

3. Method according to claim 1,
**characterised in that**
firstly a cast billet is produced, which subsequently is formed in a single or multi-stage rolling process into a solid or hollow rod.

4. Method according to claim 1,
**characterised in that**
firstly a cast billet is produced, which subsequently is formed in a single or multi-stage forging process into a solid or hollow rod.

5. Method according to claim 1,
**characterised in that**
firstly a cast billet is produced, which subsequently is formed in a single or multi-stage drawing process into a solid or hollow rod.

6. Method according to claim 1,
**characterised in that**
the extruded solid or hollow rod is subsequently subjected to a single or multi-stage forging process.

7. Method according to claim 1,
**characterised in that**
the extruded solid or hollow rod is subsequently subjected to a single or multi-stage drawing process.

8. Method according to claim 1,
**characterised in that**
a forged solid or hollow blank is produced as initial material for the press fitting element, the outer contour of which blank, with overmeasure, corresponds approximately to the finished contour, and the finished contour is produced by means of metal-removing machining.

9. Method according to one of the claims 1 to 8,
**characterised in that**,
for press fitting elements having a region for a retaining tool which can be applied, a solid or hollow rod is produced, which has, over the entire length, an outer contour which is suitable as the finished contour.

10. Method according to one of the claims 1 to 8,
**characterised in that**,
for press fitting elements having a region for a retaining tool which can be applied, a forged blank is produced which has such a region which, if necessary, is also subjected to the metal-removing machining.

11. Method according to claim 9 and 10,
**characterised in that**
the region which is suitable for a retaining tool has a hexagon as outer contour.

12. Method according to one of the claims 1 to 11,
**characterised in that**
the metal-removing machining is turning.

13. Method according to one of the claims 1 - 11,
**characterised in that**
the machining without metal removal which follows the metal-removing machining is cold forming.

14. Method according to one of the claims 1 - 13,
**characterised in that**
the hook-shaped region which receives an O-ring seal is produced by means of machining without metal removal.

15. Method according to one of the claims 1 - 14,
**characterised in that**,
in order to produce a press fitting element, at least one machining without metal removal is necessary.

16. Method according to one of the claims 1 - 15,
**characterised in that**
an unalloyed C steel is used as the material.

17. Method according to one of the claims 1 - 15,
**characterised in that**
a stainless high-alloy steel is used as the material.

18. Method according to claim 17,
**characterised in that**
a stainless high-alloy steel with the designation X5CrNiMoTi17-12-2 with the material number 1.4401 is used.

19. Method according to claim 1 - 17,
**characterised in that**
a stainless high-alloy steel with the designation X6CrNiMo17-12-2 with the material number 1.4571 is used.

20. Method according to one of the claims 1 - 15,
**characterised in that**
a gunmetal is used as the material.

21. Method according to claim 20,
**characterised in that**
a gunmetal with the designation CuSn2ZnPb with the material number 2.1098.01 is used.

22. Method according to claim 20,
**characterised in that**
a gunmetal with the designation CuSn5ZnPb with the material number 2.1096.01 is used.

23. Method according to one of the claims 1 to 15,
**characterised in that**
a copper-zinc alloy (brass) is used as the material.

24. Method according to one of the claims 1 to 23,
**characterised in that**,
before machining, the initial material is subjected, if necessary, to a heat treatment.

25. Method according to one of the claims 1 to 23,
**characterised in that**
the finished press fitting element is subjected, if necessary, to a heat treatment.

26. Method according to claim 25,
**characterised in that**,
in the case of press fitting elements produced from high-alloy steel, the heat treatment is annealing at approx. 1100°C with cooling in a reducing atmosphere.

## Revendications

1. Procédé de fabrication d'un élément de raccord métallique embouti à la presse (1, 2, 5, 6, 8, 9, 11, 12, 21)
- comprenant une zone (3, 25) en forme de crochet, de section pratiquement en forme de toit logeant un joint torique d'étanchéité, et une zone cylindrique lui faisant suite (4, 24) qui est opposée au côté d'insertion du tuyau à relier à l'élément de raccord embouti,
- dans lequel une barre pleine ou creuse provenant de matière coulée en continu ou extrudée est utilisée comme matière de départ pour l'élément de raccord embouti et usinée par enlèvement de copeaux et
- les zones à comprimer (3, 4, 24, 25) de l'élément de raccord embouti (1, 2, 5, 6, 8, 9, 11, 12, 21) sont formées par usinage par enlèvement de copeaux selon la forme et l'épaisseur de paroi de manière à correspondre aux zones à comprimer d'un élément de raccord embouti façonné à froid à partir d'une tôle de telle manière que
- les éléments de raccord emboutis ainsi fabriqués (1, 2, 5, 6, 8, 9,11, 12, 21) sont déformables plastiquement pour former une liaison inséparable et étanche entre l'élément de raccord embouti et un tuyau au moyen d'un outil de compression entourant l'élément de raccord embouti ainsi que le tuyau enfoncé dans celui-ci et présentant au moins deux mâchoires après la mise en place et la fermeture des mâchoires et que,
- pendant la compression, les mâchoires peuvent agir aussi bien sur la zone en forme de crochet (3, 25), y compris le joint torique d'étanchéité inséré dedans, que sur le segment (4, 24) de forme cylindrique opposé au côté d'insertion de l'élément de raccord embouti (1, 2, 5, 6, 8, 9, 11, 12, 21), de telle sorte que les zones de sommet de la zone en forme de crochet (3, 25) sont principalement réduites en diamètre et les zones attenantes à la zone de sommet de la zone en forme de crochet (3, 25) sont resserrées l'une contre l'autre.

2. Procédé selon la revendication 1,
**caractérisé en ce que** la barre pleine ou creuse est en outre usinée sans enlèvement de copeaux.

3. Procédé selon la revendication 1,
**caractérisé en ce qu'**une billette de coulée continue est d'abord produite, laquelle est ensuite formée en une barre pleine ou creuse dans un procédé de laminage en une ou plusieurs passes.

4. Procédé selon la revendication 1,
**caractérisé en ce qu'**une billette de coulée continue est d'abord produite, laquelle est ensuite formée en une barre pleine ou creuse dans un procédé de forgeage en une ou plusieurs passes.

5. Procédé selon la revendication 1,
**caractérisé en ce qu'**une billette de coulée continue est d'abord produite, laquelle est ensuite formée en une barre pleine ou creuse dans un procédé d'étirage en une ou plusieurs passes.

6. Procédé selon la revendication 1,
**caractérisé en ce que** la barre pleine ou creuse extrudée est ensuite soumise à un processus de forgeage en une ou plusieurs passes.

7. Procédé selon la revendication 1,
**caractérisé en ce que** la barre pleine ou creuse extrudée est ensuite soumise à un processus d'étirage en une ou plusieurs passes.

8. Procédé selon la revendication 1,
**caractérisé en ce que**, comme matière de départ pour l'élément de raccord embouti, une ébauche forgée pleine ou creuse est produite, dont le contour extérieur est légèrement surdimensionné par rapport au contour fini et le contour fini est produit par un usinage par enlèvement de copeaux.

9. Procédé selon l'une des revendications 1 à 8,
**caractérisé en ce que**, pour des éléments de raccord emboutis avec une zone adaptée à un outil de fixation pouvant être mis en place, une barre pleine ou creuse est produite, laquelle présente sur toute la longueur un contour extérieur adapté au contour fini.

10. Procédé selon l'une des revendications 1 à 8,
**caractérisé en ce que**, pour des éléments de raccord emboutis avec une zone adaptée à un outil de fixation pouvant être mis en place, une ébauche forgée est produite, laquelle présente une telle zone qui est le cas échéant soumise aussi à l'usinage par enlèvement de copeaux.

11. Procédé selon les revendications 9 et 10,
**caractérisé en ce que** la zone adaptée à un outil de fixation présente un hexagone comme contour extérieur.

12. Procédé selon l'une des revendications 1 à 11,
**caractérisé en ce que** l'usinage par enlèvement de copeaux est un tournage.

13. Procédé selon l'une des revendications 1 à 11,
**caractérisé en ce que** l'usinage sans enlèvement de copeaux faisant suite à l'usinage par enlèvement de copeaux est un formage à froid.

14. Procédé selon l'une des revendications 1 à 13,
**caractérisé en ce que** la zone en forme de crochet, logeant un joint torique d'étanchéité, est produite par un usinage sans enlèvement de copeaux.

15. Procédé selon l'une des revendications 1 à 14,
**caractérisé en ce qu'**au moins un usinage sans enlèvement de copeaux est nécessaire pour fabriquer un élément de raccord embouti.

16. Procédé selon l'une des revendications 1 à 15,
**caractérisé en ce qu'**on utilise comme matière un acier au carbone non allié.

17. Procédé selon l'une des revendications 1 à 15,
**caractérisé en ce qu'**on utilise comme matière un acier inoxydable fortement allié.

18. Procédé selon la revendication 17,
**caractérisé en ce qu'**on utilise un acier inoxydable fortement allié ayant pour désignation X5CrNiMo17-12-2 et pour numéro de matière 1.4401.

19. Procédé selon les revendications 1 à 17,
**caractérisé en ce qu'**on utilise un acier inoxydable fortement allié ayant pour désignation X6CrNiMoTi17-12-2 et pour numéro de matière 1.4571.

20. Procédé selon l'une des revendications 1 à 15,
**caractérisé en ce qu'**on utilise comme matière un laiton rouge.

21. Procédé selon la revendication 20,
**caractérisé en ce qu'**on utilise un laiton rouge ayant pour désignation CuSn2ZnPb et pour numéro de matière 2.1098.01.

22. Procédé selon la revendication 20,
**caractérisé en ce qu'**on utilise un laiton rouge ayant pour désignation CuSn5ZnPb et pour numéro de matière 2.1096.01.

23. Procédé selon l'une des revendications 1 à 15,
**caractérisé en ce qu'**on utilise comme matière un alliage cuivre-zinc (laiton).

24. Procédé selon l'une des revendications 1 à 23,
**caractérisé en ce que** la matière de départ est le cas échéant soumise à un traitement thermique avant l'usinage.

25. Procédé selon l'une des revendications 1 à 23,
**caractérisé en ce que** l'élément de raccord embouti fini est le cas échéant soumis à un traitement thermique.

26. Procédé selon la revendication 25,
**caractérisé en ce que**, dans le cas d'éléments de raccord emboutis fabriqués en acier fortement allié, le traitement thermique est un recuit à 1100°C environ avec un refroidissement en atmosphère réductrice.
